# EUROPEAN PATENT SPECIFICATION

(11) **EP 2 997 207 B1**
(45) Date of publication and mention of the grant of the patent: **28.03.2018**
(21) Application number: 14797332.5
(22) Date of filing: 06.05.2014
(51) Int. Cl.: E05B 17/00, B23C 3/28, E05B 21/06

(54) **DISC TUMBLER LOCK ASSEMBLY DEVICE**
TAUMELSCHEIBEN-SCHLOSSMONTAGEVORRICHTUNG
DISPOSITIF D'ENSEMBLE DE SERRURE À GÂCHETTE À DISQUE

(30) Priority: 15.05.2013 FI 20135517
(43) Date of publication of application: 23.03.2016
(73) Proprietor: Aalto, Tuure, 54710 Lemi (FI)
(72) Inventor: Aalto, Tuure, 54710 Lemi (FI)
(74) Representative: Papula Oy
(86) International application number: PCT/FI2014/050333
(87) International publication number: WO 2014/184425

(56) References cited:
- FI-A- 832 185
- FI-C- 66 965
- FR-A1- 2 752 863

## Description

### FIELD OF THE INVENTION

The invention relates to a disc tumbler lock assembly device for machining tumbler discs packed in a cylinder so as to correspond to the key for that lock.

### BACKGROUND OF THE INVENTION

A disc tumbler cylinder lock is a structure having a fixed outer cylinder and, therein, a rotating inner cylinder, inside which there are a number of tumbler discs. The tumbler discs are rotatable through a rotating movement of the key for the lock so that a locking bar controlled in the radial direction of the lock by the tumbler discs so as to lock the inner cylinder to the outer cylinder is, in the position of the tumbler discs as determined by the key, able to move radially to a position that releases the inner cylinder. Traditionally, the disc tumbler cylinder lock has been assembled from different tumbler discs which have been packed in the inner cylinder as a combination that corresponds to the key. The structure is slow and difficult to assemble, and it requires a great number of different tumbler discs of which the required discs are then selected in a correct order.

A solution to this problem has been sought by the method according to Finnish patent FI-66965. In the method, the inner cylinder is loaded with identical tumbler discs, that is to say, having no peripheral notches machined for the locking bar. The key is then inserted in its place and used to turn the tumbler discs to the opening position that corresponds to the key. A groove can then be machined in the pack of tumbler discs at the position of the locking bar so as to correspond to the shape of the locking bar.

The disclosed method is theoretically functional as such, but is not feasible on the basis of the teachings of the publication. If the tumbler discs in the cylinder are just turned to a specific position by a key, it does not yet allow the machining of a groove for a locking bar. The tolerances of the inner cylinder, tumbler discs and the key together result in the tumbler discs turned to a correct position not remaining in their place to a sufficient degree during machining, and they cannot be effectively held in their place even by rotating the key when machining the groove.

### OBJECTIVE OF THE INVENTION

The objective of the invention is to remedy the above-mentioned defects of the prior art. Specifically, the objective of the invention is to disclose a new assembly device allowing efficient and accurate assembly of locks.

### SUMMARY OF THE INVENTION

The disc tumbler lock assembly device according to the invention is designed for machining tumbler discs packed in an inner cylinder so as to correspond to the key for that lock. In other words, the assembly device is designed for machining in the tumbler discs a groove for a locking bar to allow the locking between the inner cylinder and outer cylinder to be released. According to the invention, the assembly device includes a holder having at least one support hole in which an inner cylinder provided with tumbler discs can be positioned. The support hole is tight-fitting with the inner cylinder, yet allowing the inner cylinder to be turned in the hole. Substantially over the entire length of the support hole there is a machining groove in the direction of the support hole opening to the outer surface of the holder therefrom, thus forming for a suitable machining edge an open and free access to the inner cylinder placed in the support hole and to the tumbler discs therein. Further, the assembly device includes a locking cap for locking the inner cylinder in its place in the holder. In connection with the locking cap, i.e. in the locking cap itself or in a part provided in immediate proximity thereto, there is a locking hole that corresponds to the cross-sectional profile of the key as accurately as possible so that the key inserted through the locking cap reliably remains in its place in a rotationally stiff manner. In addition, the assembly device includes, at the end of the holder opposite to the locking cap, a turning element for turning the pack of tumbler discs in the inner cylinder relative to the immovable key and a tightening element for tightening the cylinder and the turned tumbler discs tightly in their place. This way, as the tumbler discs, the key and the inner cylinder are pressed tightly together as an unmovable assembly, a groove for a locking bar can be machined on the outer periphery of the tumbler discs along the machining groove of the holder. The machine tool and the machining edge used may be any suitable means and method known per se, such as different milling cutters or cutting beams.

In one embodiment of the invention, the holder is a cylindrical object and includes a number of support holes which are parallel and symmetrically provided around the central axis of the holder. This way, it is possible to simultaneously mount in the holder a number of inner cylinders and corresponding keys so as to complete a number of locks at the same time. It is to be noted that the locking holes that correspond to the profile of the key in the locking cap need not be similar. Thus, it is possible that the holder includes for instance five support holes and the locking cap has five corresponding locking holes. All five locking holes may be different and correspond to each one specific cross-sectional profile of a key type. One device can thus be used to assemble five different locks. It is certainly possible that all locking holes are similar, so that a number of locks that belong for example to the same system can be produced at the same time.

The purpose of the locking cap is firstly to lock the key in its place in a rotationally stiff manner and secondly to press the inner cylinder with tumbler discs in its place in the holder. Since the inner cylinders may have minor differences in tolerances, it is preferred that the locking cap includes a flexible structure around the locking hole for arranging a flexible pressure locking to the inner cylinder provided with tumbler discs in the longitudinal direction thereof. Thus, as compared to a rigid locking cap, each inner cylinder can be provided with a reliable and uniform locking. The flexible structure is suitably provided in the locking cap by openings made around the locking hole so that the locking hole is supported to the locking cap by means of narrow strips only. By selecting suitable widths for the strips, the locking can be provided with the desired flexibility.

In one embodiment of the invention, the turning element includes a turning shaft that extends into the support hole for turning the inner cylinder placed in the support hole accompanied by the tumbler discs against the key locked in its place.

The turning element suitably includes, for each support hole of the holder, a specific turning shaft and a common turning wheel in power transmission communication with each turning shaft for turning all cylinders at the same time. Thus, by turning one turning wheel once in a specific direction, all inner cylinders and the tumbler discs therein can be turned to the positions determined by the corresponding keys.

The tightening element suitably includes a threaded shaft provided centrally relative to the holder so as to extend therethrough. This way, the holder and the structures at the ends thereof, including the locking cap, can be rotationally pressed in their place as a tight structure that holds the inner cylinders with tumbler discs in their place.

In a preferred embodiment of the invention, the turning element and the tightening element are arranged to be operated by a common turning wheel and a common shaft. In this case, the shaft can be moved in the longitudinal direction thereof relative to the holder so that, in the longitudinal direction of the shaft, in a first position when the shaft is rotated the turning element operates by turning the inner cylinders to the desired position and in a second position the tightening element operates by tightening the structure so as to be ready for machining. Of course, when operated in the opposite direction, in the second position of the shaft the tightened structure can be opened and then in the first position of the shaft the inner cylinders can be turned to the initial position where the keys can be drawn out from the key cylinders.

Preferably, guide grooves are provided in connection with the outer periphery of the holder of the assembly device. Correspondingly, the machine tool for machining the tumbler discs has guide bars that correspond to the guide grooves. This way, the assembly device can be supported to the guide bars of the machine tool with precision and pushed along the guide bars so that the edge of the machine tool machines a groove for a locking bar in the tumbler discs through the machining groove of the holder. The guide grooves provided in connection with the holder may reside in the holder itself or in plate-shaped end pieces installed at the ends of the holder or both. It is essential that the entire tight assembly of pieces can be moved precisely as required by the machining operation of the machine tool being used so that the desired accurate groove can be machined in the tumbler discs.

### ADVANTAGES PROVIDED BY THE INVENTION

The disc tumbler lock assembly device according to the invention has considerable advantages over the prior art. The new features of the invention and the compact size of the device allow the production of tumbler discs regardless of place. The device allows very accurate and exact machining of grooves in tumbler discs. Furthermore, a number of assembly operations can be made at the same time by one device. The device is also readily adaptable to any key profile. The holder part used in the device forms a good support for the inner cylinders with tumbler discs, so it can be used as a storage and transportation support for the parts of the lock and as a sales package therefor.

### BRIEF DESCRIPTION OF THE DRAWINGS

The invention will be described below in detail with reference to the accompanying drawings, in which
Fig. 1 is a schematic sectional view of one device according to the invention,
Fig. 2 is a more detailed exploded view of one device according to the invention and
Fig. 3 shows the device of Fig. 2 mounted on a machine tool.

### DETAILED DESCRIPTION OF THE INVENTION

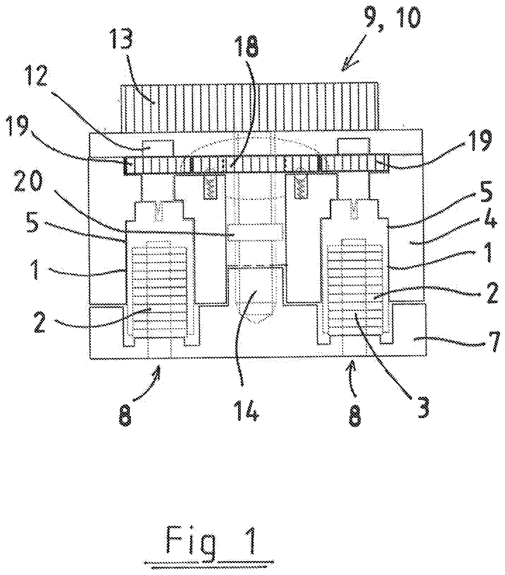

Fig. 1 shows a sectional view of one assembly device according to the invention, wherein the central body of the device is formed by a cylindrical holder 4 having a number of support holes 5 symmetrically around the central axis thereof. The support holes can be provided with inner cylinders 1 of a disc tumbler cylinder lock loaded with similar tumbler discs 2 with no grooves. The inner cylinders can be locked in their place by a locking cap 7 placed thereon. The locking cap has a locking hole 8 aligned with each support hole 5, the shape of the opening accurately corresponding to the cross-sectional profile of the key to be inserted therein.

The other end of the holder 4, i.e. the opposite end relative to the locking cap 7, has a structure that jointly constitutes a turning element 9 and a tightening element 10 of the device. It includes a central turning shaft 14 that extends into the holder 4 and has a turning wheel 13 at the outer end thereof for turning the turning shaft. A central gear 18 is arranged around the turning shaft in power transmission communication with a turning gear 19 provided for each support hole, by the turning of which the corresponding inner cylinder 1 can be turned. In addition, the central gear can be coupled to the turning shaft when a coupling element 20 provided on the turning shaft is transferred to the level of the central gear in the longitudinal direction of the turning shaft. Thus, by drawing the turning wheel 13 outwards in Fig. 1 and by bringing the coupling element 20 to the level of the central gear 18, the turning of the turning wheel 13 will turn the inner cylinders 1 and the tumbler discs 2 therein. Before turning, keys have been inserted through locking holes 8 centrally into the tumbler discs so that they limit the turning of the tumbler discs and define for them specific rotating angles.

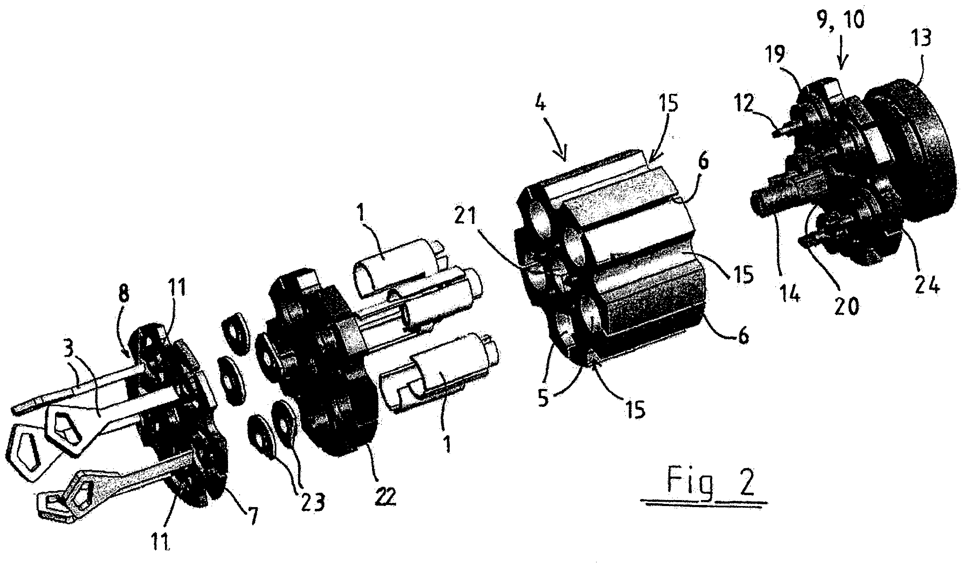

Fig. 2 illustrates in more detail one assembly device according to the invention. The holder 4 that constitutes the central body of the device is a cylindrical object. A central hole 21 extends therethrough. The holder has, symmetrically around the hole 21, five support holes 5. The support holes are so dimensioned that they close-fittingly accommodate the inner cylinders 1 of the disc tumbler cylinder lock loaded with tumbler discs. The holder 4 has, at each support hole 5, a machining groove 6 that opens perpendicularly, i.e. in the radial direction, therefrom to the outer cover of the holder and extends over the entire axial length of the holder. Further, midway between each machining groove 6 on the surface of the holder there are guide grooves 15 in the direction of the machining groove 6.

The inner cylinders 1 can be placed in the support holes of the holder 4 from one end of the holder only, and this end can be closed by a plate-shaped abutment piece 22 and the locking cap 7 positioned thereon. Both of the abutment piece and the locking cap have a machining groove 6 and a guide groove 15 that correspond to the shapes of the holder. Further, between the abutment piece 22 and the locking cap 7, suitable adjustment and abutment pieces 23 can be used, by which the pressure between different parts can be balanced and increased as required.

The locking cap 7 has, in positions that correspond to the support holes 5 of the holder, five corresponding locking holes 8, of which each can be provided with a key 3 so that it extends into the corresponding inner cylinder 1. The locking hole 8 accurately corresponds in shape to the cross sectional profile of each key being used so that the key is not able to turn in the locking hole but lies in its place therein in a rotationally stiff manner. The locking holes 8 that lock the key in a rotationally stiff manner may as well be provided in the adjustment and abutment piece 23 or in the abutment piece 22 or also in a number of them at the same time. Further, around each locking hole 8 of the locking cap 7, there is formed a flexible structure 11, i.e. curved openings that surround the locking hole, so that between them there are only narrow strips supporting the locking holes 8. This way, flexibility is provided around the locking holes of the locking cap 7 to balance the pressure of the locking cap toward the inner cylinders.

The other end of the holder 4 includes a turning element 9 and a tightening element 10 provided as one structure in the following way. A disc-shaped turning wheel 13 is rigidly fitted with a shaft 14 supported to this turning tightener body 24 rotationally and slidingly in the longitudinal direction of the shaft. The outer end of the shaft is threaded. Thus, the shaft 14 inserted through the hole 21 of the holder 4 can be threaded to the corresponding threads of the central holes in the abutment piece 22 and the locking cap 7. Thus, by pressing the holder 4 between the body 24 and the locking cap 7, the inner cylinders 1 can be locked in their place in the support holes 5 of the holder 4.

Before tightening the package together as mentioned above, the same shaft 14 is used to turn the inner cylinders 1 accompanied by the packs of tumbler discs therein to the position of machining the grooves for locking bars as follows. As illustrated in connection with Fig. 1, for each support hole of the holder there is a corresponding turning shaft 12 with the outer end extending to the end of the inner cylinder placed in the support hole 5. Further, the turning shaft has a turning gear 19 that contacts the central gear 18 around the shaft 14. When positioning the shaft in the longitudinal direction thereof in a specific position relative to the central gear, a coupling element 20 arranged therein is provided to the level of the central gear. In this case, the turning of the turning wheel 13 turns the shaft 14 accompanied by the central gear 18, the turning gear 19, the turning shaft 12 and the inner cylinder 1 in contact thereto with the tumbler discs. Thus, by turning the turning wheel 13, the tumbler discs can be turned as required by the key 3 inserted and locked in its place therein.

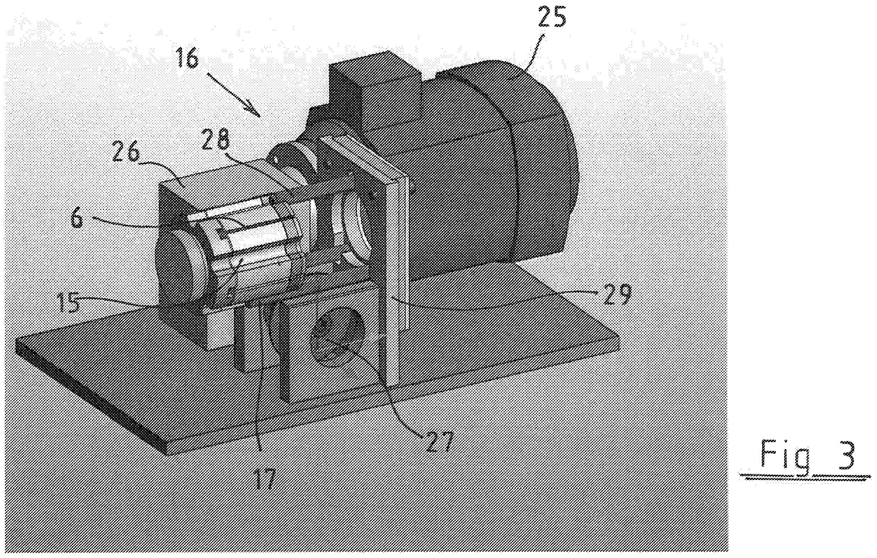

Once the assembly device according to Fig. 2 has been loaded with inner cylinders 1 and corresponding keys 3 and turned and locked to the position of machining the grooves for locking bars, the whole device can be transferred to a machine tool 16 according to Fig. 3. The machine tool 16 includes a motor 25, a gearbox 26 and a machining edge 27. Over the machining edge there are two parallel guide bars 17, and centrally there-above there is a third guide bar 28. In the triangle constituted by these three parallel guide bars, i.e. between the guide bars, the assembly device can be inserted, having the guide grooves 15 that correspond in shape to the guide bars 17 and 28 on the outer surface thereof. The guide grooves 15 and guide bars 17 and 28 are dimensioned accurately relative to each other so that the assembly device settles tightly on the guide bars and slides along the guide bars with precision.

The assembly device being positioned on the guide bars 17,28, the machining edge 27 is placed so as to extend to the tumbler discs to be machined through the machining groove 6 of the holder when the assembly device is pushed along the guide bars. The tumbler discs can thus be accurately provided with a correctly shaped groove for a locking bar in a correct position. As the assembly device is symmetrical relative to the central axis thereof, it can be installed on the guide bars of the machine tool 16 sequentially in all five different positions, and thus all five different inner cylinders with the tumbler discs can be machined one after the other.

The depth of the groove to be made in the tumbler discs can be adjusted by raising or lowering, relative to the machining edge 27, the support structure 29 which supports the guide bars 17 and 28. This way, the distance of the whole assembly device from the machining edge can be suitably varied and the groove created in the tumbler discs made suitably deep.

The assembly device illustrated in the drawings can be readily used also for keyless production of tumbler discs. In this case, the tumbler discs are positioned in the inner cylinder so that the limiter of the tumbler disc is arranged in the groove of the inner cylinder 1. The tumbler disc is thus not able to turn relative to the inner cylinder. The turning of the turning wheel 13 turns the shaft 14 accompanied by the central gear 18 and the turning gear 19. With the turning gear 19, the turning shaft 12 is turned as well as the inner cylinder 1 in contact thereto with the pack of tumbler discs therein. For example the turning gear 19 or other suitable part may be provided with a scale, by means of which the desired turning angle can be determined accurately, which allows accurate machining of the groove for a locking bar in the desired position of the pack of tumbler discs to produce the desired tumbler discs.

The invention has been described above by way of examples with reference to the accompanying drawings; however, different embodiments of the invention are possible within the scope defined by the claims.

## Claims

1. A disc tumbler cylinder lock assembly device for machining tumbler discs (2) packed in an inner cylinder (1) so as to correspond to the key (3) for that lock, **characterized in that** the assembly device includes a holder (4) having at least one support hole (5) in which the inner cylinder (1) provided with tumbler discs (2) can be positioned; a machining groove (6) in the direction of the support hole, opening to the outer surface of the holder from the support hole; a locking cap (7) for locking the inner cylinder in its place in the holder; in connection with the locking cap, a locking hole (8) that corresponds to the profile of the key (3) for holding the key inserted therethrough in its place in a rotationally stiff manner; at the end of the holder opposite to the locking cap, a turning element (9) for turning the pack of tumbler discs in the inner cylinder relative to the unmovable key; and a tightening element (10) for tightening the inner cylinder and the turned tumbler discs tightly in their place, so that the outer periphery of the tumbler discs can be provided with a groove for a locking bar along the machining groove (6) of the holder.

2. The assembly device according to claim 1, **characterized in that** the holder (4) is a cylindrical object and includes a number of support holes (5) which are parallel and symmetrically provided around the central axis of the holder.

3. The assembly device according to claim 1 or 2, **characterized in that** a specific locking hole (8) is included in connection with the locking cap (7) for each support hole (5) of the holder (4) for locking a key (3) having a specific cross-sectional profile in the locking cap in a rotationally stiff manner.

4. The assembly device according to any one of claims 1-3, **characterized in that** the locking cap (7) includes a flexible structure (11) around the locking hole (8) for arranging a flexible pressure locking to the inner cylinder provided with tumbler discs in its longitudinal direction.

5. The assembly device according to any one of claims 1-4, **characterized in that** the turning element (9) includes a turning shaft (12) that extends to the support hole (5) for turning the inner cylinder accompanied by the tumbler discs placed in the support hole.

6. The assembly device according to claim 5, **characterized in that** the turning element (9) includes a specific turning shaft for each support hole of the holder and a common turning wheel (13) which is provided in power transmission communication with each turning shaft for turning all inner cylinders at the same time.

7. The assembly device according to claim 6, **characterized in that** the tightening element (10) includes a threaded shaft (14) provided centrally relative to the holder (4) and extending therethrough to be turned for pressing the locking cap in its place against the inner cylinders.

8. The assembly device according to claim 6 or 7, **characterized in that** the turning element (9) and the tightening element (10) are arranged to be operated by a common turning wheel (13) and a common shaft (14) so that, in the longitudinal direction of the shaft in a first position when rotating the shaft the turning element operates and in a second position the tightening element operates.

9. The assembly device according to any one of claims 1-8, **characterized in that** in connection with the outer periphery of the holder (4) there are guide grooves (15) on whose support the holder can be moved along guide bars (17,28) of a machine tool (16) being used when machining a groove for a locking bar in the tumbler discs.

10. The assembly device according to any one of claims 1-9, **characterized in that** the locking hole (8) is provided in the locking cap (7), in an abutment element (22) and/or in an adjustment and abutment element (23) therebetween.

## Patentansprüche

1. Scheibenschließzylinderschloss-Montagevorrichtung zum Bearbeiten von Schließzylinderscheiben (2), die in einem inneren Zylinder (1) gepackt sind, um dem Schlüssel (3) für das Schloss zu entsprechen, **dadurch gekennzeichnet, dass** die Montagevorrichtung eine Halterung (4) mit zumindest einem Stützloch (5), in dem der innere Zylinder (1), der mit Schließzylinderscheiben (2) bereitgestellt ist, angeordnet werden kann; eine Bearbeitungsnut (6) in der Richtung des Stützloches, die sich zu der äußeren Oberfläche der Halterung von dem Stützloch öffnet; eine Verschlusskappe (7) zum Schließen bzw. Verriegeln des inneren Zylinders an seinem Platz in der Halterung; ein Verriegelungsloch (8) in Verbindung mit der Verschlusskappe, das dem Profil des Schlüssels (3) entspricht, zum Halten des Schlüssels, der dadurch eingeführt wird, an seinem Platz auf eine drehfeste Weise; ein Drehelement (9) an dem Ende der Halterung gegenüberliegend der Verschlusskappe zum Drehen der Packung bzw. dem Stapel von Schließzylinderscheiben in dem inneren Zylinder relativ zu dem nicht bewegbaren Schlüssel; und ein Anziehelement (10) zum Anziehen des inneren Zylinders und der gedrehten Schließzylinderscheiben fest an ihrem Platz, so dass die äußere Peripherie der Schließzylinderscheiben mit einer Nut für einen Sperriegel entlang der Bearbeitungsnut (6) der Halterung bereitgestellt werden kann, aufweist.

2. Montagevorrichtung nach Anspruch 1, **dadurch gekennzeichnet, dass** die Halterung (4) ein zylindrisches Objekt ist und eine Anzahl von Stützlöchern (5) aufweist, die parallel und symmetrisch um die mittlere Achse der Halterung bereitgestellt werden.

3. Montagevorrichtung nach Anspruch 1 oder 2, **dadurch gekennzeichnet, dass** ein spezifisches Verriegelungsloch (8) in Verbindung mit der Verschlusskappe (7) für jedes Stützloch (5) der Halterung (4) zum Verriegeln eines Schlüssels (3) mit einem spezifischen Querschnittsprofil in der Verschlusskappe auf eine drehsteife Weise vorgesehen ist.

4. Montagevorrichtungn nach einem der Ansprüche 1 -3, **dadurch gekennzeichnet, dass** die Verschlusskappe (7) eine flexible Struktur (11) um das Verriegelungsloch (8) zum Anordnen einer flexiblen Drucksperre zu dem inneren Zylinder, der mit Schließzylinderscheiben in seiner Längsrichtung bereitgestellt ist, aufweist.

5. Montagevorrichtungn nach einem der Ansprüche 1-4, **dadurch gekennzeichnet, dass** das Drehelement (9) eine Drehwelle (12) aufweist, die sich zu dem Stützloch (5) erstreckt, um den inneren Zylinder zu drehen, der von den Schließzylinderscheiben begleitet wird, die in dem Stützloch angeordnet sind.

6. Montagevorrichtungn nach Anspruch 5, **dadurch gekennzeichnet, dass** das Drehelement (9) eine spezifische Drehwelle für jedes Stützloch der Halterung und ein gemeinsames Drehrad (13), das in Kraftübertragungskommunikation mit jeder Drehwelle zum Drehen sämtlicher innerer Zylinder zu derselben Zeit bereitgestellt wird, aufweist.

7. Montagevorrichtung nach Anspruch 6, **dadurch gekennzeichnet, dass** das Anziehelement (10) eine Gewindewelle (14) aufweist, die mittig relativ zu der Halterung (4) bereitgestellt ist und sich durch diese hindurch erstreckt, um die Verschlusskappe an ihrem Platz gegen die inneren Zylinder zu drücken.

8. Montagevorrichtung nach Anspruch 6 oder 7, **dadurch gekennzeichnet, dass** das Drehelement (9) und das Anziehelement (10) angeordnet sind, um von einem gemeinsamen Drehrad (13) und einer gemeinsamen Welle (14) betrieben zu werden, so dass in der longitudinalen Richtung der Welle in einer ersten Position, wenn die Welle gedreht wird, das Dreheelement arbeitet und in einer zweiten Position das Anziehelement arbeitet.

9. Montagevorrichtung nach einem der Ansprüche 1-8, **dadurch gekennzeichnet, dass** in Verbindung mit dem äußeren Umfeld der Halterung (4) Führungsnuten (14) vorgesehen sind, auf deren Stützung die Halterung entlang von Führungsschienen (17, 28) eines Maschinenwerkzeugs (16) bewegt werden kann, das verwendet wird, wenn eine Nut für eine Verschließschiene in den Schließzylinderscheiben bearbeitet wird.

10. Montagevorrichtung nach einem der Ansprüche 1-9, **dadurch gekennzeichnet, dass** das Verriegelungsloch (8) in der Verschlusskappe (7), in einem Anschlagelement (22) und/oder in einem Anpassungs- und Anschlagelement (23) dazwischen bereitgestellt wird.

## Revendications

1. Dispositif d'ensemble de serrure à gâchette à disque pour l'usinage de disques de gâchette (2) emballés dans un cylindre intérieur (1) de sorte à correspondre à la clé (3) pour cette serrure, **caractérisé en ce que** le dispositif d'ensemble inclut un support (4) présentant au moins un trou de support (5) dans lequel le cylindre intérieur (1) doté de disques de gâchette (2) peut être positionné ; une rainure d'usinage (6) dans la direction du trou de support, ouvrant sur la surface extérieure du support depuis le trou de support ; un capuchon de verrouillage (7) pour le verrouillage du cylindre intérieur à sa place dans le support ; en connexion avec le capuchon de verrouillage, un trou de verrouillage (8) qui correspond au profil de la clé (3) pour maintenir la clé insérée au travers de celui-ci à sa place de manière rigide en rotation ; à l'extrémité du support opposé au capuchon de verrouillage, un élément de rotation (9) pour la rotation de l'emballage de disques de gâchette dans le cylindre intérieur par rapport à la clé immobile ; et un élément de serrage (10) pour le serrage du cylindre intérieur et des disques de gâchette tournés étroitement à leur place de sorte que la périphérie extérieure des disques de gâchette puissent être dotée d'une rainure pour une barre de verrouillage le long de la rainure d'usinage (6) du support.

2. Dispositif d'ensemble selon la revendication 1, **caractérisé en ce que** le support (4) est un objet cylindrique et inclut un nombre de trous de support (5) qui sont parallèles et prévus symétriquement autour de l'axe central du support.

3. Dispositif d'ensemble selon la revendication 1 ou 2, **caractérisé en ce qu'**un trou de verrouillage spécifique (8) est inclus en connexion avec le capuchon de verrouillage (7) pour chaque trou de support (5) du support (4) pour le verrouillage d'une clé (3) présentant un profil de section transversale spécifique dans le capuchon de verrouillage de manière rigide en rotation.

4. Dispositif d'ensemble selon l'une quelconque des revendications 1 à 3, **caractérisé en ce que** le capuchon de verrouillage (7) inclut une structure flexible (11) autour du trou de verrouillage (8) pour agencer une pression flexible verrouillant le cylindre intérieur doté de disques de gâchette dans sa direction longitudinale.

5. Dispositif d'ensemble selon l'une quelconque des revendications 1 à 4, **caractérisé en ce que** l'élément de rotation (9) inclut un arbre de rotation (12) qui s'étend vers le trou de support (5) pour la rotation du cylindre intérieur accompagné par les disques de gâchette placés dans le trou de support.

6. Dispositif d'ensemble selon la revendication 5, **caractérisé en ce que** l'élément de rotation (9) inclut un arbre de rotation spécifique pour chaque trou de support du support et une roue de rotation commune (13) qui est prévue en communication de transmission de puissance avec chaque arbre de rotation pour tourner tous les cylindres intérieurs en même temps.

7. Dispositif d'ensemble selon la revendication 6, **caractérisé en ce que** l'élément de serrage (10) inclut un arbre fileté (14) prévu centralement par rapport au support (4) et s'étendant au travers de celui-ci pour être tourné pour le pressage du capuchon de verrouillage à sa place contre les cylindres intérieurs.

8. Dispositif d'ensemble selon la revendication 6 ou 7, **caractérisé en ce que** l'élément de rotation (9) et l'élément de serrage (10) sont agencés pour être actionnés par une roue de rotation commune (13) et un arbre commun (14) de sorte que dans la direction longitudinale de l'arbre dans une première position lors de la rotation de l'arbre l'élément de rotation fonctionne et dans une seconde position l'élément de serrage fonctionne.

9. Dispositif d'ensemble selon l'une quelconque des revendications 1 à 8, **caractérisé en ce qu'**en connexion avec la périphérie extérieure du support (4) il y a des rainures de guidage (15) sur le support desquelles le support peut être déplacé le long de barres de guidage (17, 28) d'une machine-outil (16) qui est utilisée lors de l'usinage d'une rainure pour une barre de verrouillage dans les disques de gâchette.

10. Dispositif d'ensemble selon l'une quelconque des revendications 1 à 9, **caractérisé en ce que** le trou de verrouillage (8) est prévu dans le capuchon de verrouillage (7), dans un élément de butée (22) et/ou dans un élément d'ajustement et de butée (23) entre eux.
